# EUROPEAN PATENT APPLICATION

(11) **EP 2 905 568 A1**
(43) Date of publication of application: **12.08.2015**
(21) Application number: 14305166.2
(22) Date of filing: 06.02.2014
(51) Int. Cl.: F28D 7/00, F24J 2/04, F28D 20/02

(54) **Latent heat storage device and solar power plant comprising such device**

(71) Applicant: Areva Renouvelables, 92084 Paris-La Défense (FR)
(72) Inventor: De Combarieu, Guillaume, 93300 Aubervilliers (FR)
(74) Representative: Blot, Philippe Robert Emile

(57) **Abstract**

The latent heat storage device comprises a plurality of first tubes (4) containing a phase change material (6) and a plurality of second tubes (8) for circulation of a heat transfer fluid (10) through the latent heat storage device, the first tubes (4) and the second tubes (8) being arranged for heat exchange between the phase change material (6) and the heat transfer fluid (10).

## Description

The present invention relates to latent heat storage devices for storing large amounts of heat in the form of latent heat in a phase change material (PCM).

A concentrated solar power (CSP) plant comprises at least one solar thermal collector comprising a concentrator for concentrating incident solar radiations and a thermal receiver for circulation of a heat transfer fluid, the concentrator being arranged to concentrate the solar radiations towards the receiver to heat the heat transfer fluid.

Within CSP plants, direct steam generation (DSG) systems use water/steam as heat transfer fluid, the collector being arranged to generate directly steam at the exit of the receivers and to feed a power block with the steam for converting thermal energy into electric energy. The power block comprises for example a steam turbine.

A drawback of solar thermal energy power plants is their inability to provide heat and then electricity outside periods of solar radiation, so that energy consumption and production are not always matching each other.

A challenge thus consists in storing thermal energy produced during day time and delivering back the thermal energy during periods without sun (before sunrise, after sunset, overnight) or during periods with low solar radiation (cloudy periods) to produce electricity matching the demand.

Beside, CSP plants have currently oversized solar fields of solar collectors for improving start-up and shutdown efficiency. This results in overproduction of thermal energy during periods of maximum solar power (noon period) which exceeds the peak load acceptable by a power block.

A challenge thus consists in storing the thermal overproduction and delivering the thermal overproduction later.

It possible to provide a latent heat storage device for storing heat produced in a solar thermal power plant. A latent heat storage device has a vessel containing a phase change material (PCM) having a phase change temperature adapted for capturing heat as latent heat of phase change of the phase change material.

The heat storage capacity of the latent heat storage device depends upon the volume of phase change material contained in the vessel of the latent heat storage device. However, it is modulated by the efficiency of heat transfer between the heat transfer fluid and the phase change material.

It is possible to provide a latent heat storage device comprising tubes for circulation of heat transfer fluid, the tubes being immersed in the phase change material and having fins on their outer surface for promoting thermal exchanges.

However, production of tubes with fins is complicated and costly. This represents a drawback for solar thermal power plants in which a high amount of thermal energy is to be stored.

One of the aims of the invention is to provide a latent heat storage device having a high storage capacity.

To this end, the invention provides a latent heat storage device comprising a plurality of first tubes containing a phase change material and a plurality of second tubes for circulation of a heat transfer fluid through the latent heat storage device, the first tubes and the second tubes being arranged for heat exchange between the phase change material and the heat transfer fluid.

In other embodiments, the latent heat storage device comprises one or several of the following features, taken in isolation or in any technically feasible combination:
- the first tubes and the second tubes are arranged in a bundle, the first tubes and the second tubes extending parallel with respect to each other;
- each second tube is fully surrounded by adjacent first tubes;
- first tubes and second tubes are arranged at the nodes of a geometrical lattice;
- first tubes are arranged at the nodes of a geometrical lattice and second tubes extend in interstices between the first tubes;
- it comprises third tubes encapsulating phase change material, the third tubes being of smaller diameter that the first tubes, the third tubes extending in the bundle in interstices delimited between first tubes and/or second tubes;
- the first tubes and the second tube have identical cross-sections;
- the first tubes have a cross-section area larger than that of the second tubes;
- it comprises a vessel, the first tubes being encapsulated in the vessel and the second tubes extending through the vessel;
- it comprises a heat transfer medium encapsulated in the vessel and filling interstices between the first tubes and the second tubes;
- the heat transfer medium is a metal or a metal alloy;
- the heat transfer medium is in liquid state or molten state at the phase change temperature of the phase change material;
- it comprises a heat transfer medium tank fluidly connected to the vessel for transferring heat transfer medium between the vessel and the tank;
- it comprises at least one first manifold and ant least one second manifold, each second tube having one end fluidly connected to the first manifold and one end fluidly connected to the second manifold.

The invention also relates to a solar thermal power plant comprising at least one solar collector configured for using solar radiations to heat a heat transfer fluid, a power block for generating electric energy from the heat transfer fluid heated in the solar collector, at least one latent heat storage device as defined above and fluidly connected to the solar collector and the power block for circulation of the heat transfer fluid through the heat storage device in at least one operation mode.

The invention and its advantages will be better understood on reading the following specification given solely by way of example and with reference to the appended drawings in which:
- Figure 1 is a diagrammatical longitudinal section view of a latent heat storage device comprising a bundle of tubes;
- Figure 2 - 7 are diagrammatical transversal sectional views of the bundle of tubes according to various geometrical arrangements of the tubes;
- Figure 8 diagrammatically illustrates a solar thermal power plant comprising the latent heat storage device.

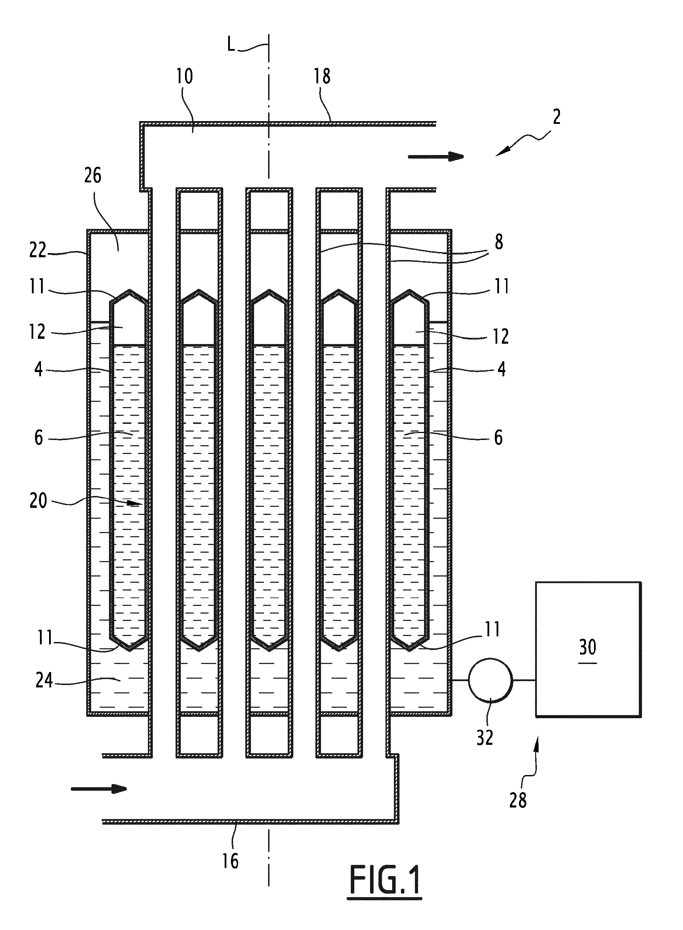

The latent heat storage device 2 of Figure 1 comprises first tubes 4 encapsulating a phase change material 6 and second tubes 8 for circulation of a heat transfer fluid 10 through the latent heat storage device 2.

The first tubes 4 and the second tubes 8 are arranged for heat exchange between phase change material 6 encapsulated in the first tubes 4 and heat transfer fluid 10 circulating in the second tubes 8.

The first tubes 4 are elongated. Each first tube 4 is closed at its ends 11. The first tubes 4 are separate. Each first tube 4 forms an individual tubular capsule encapsulating phase change material 6. Alternatively, first tubes 4 may be in fluid communication, phase change material being encapsulated in a plurality of first tubes 4 in fluid communication.

The first tubes 4 and the second tubes 8 are distinct and have respective walls. The phase change material encapsulated in the first tubes 4 and the heat transfer fluid circulating in the second tubes 8 exchange heat through the respective walls of the first tubes 4 and the respective walls of the second tubes 8.

The first tubes 4 and the second tubes 8 are made of metal. Metals have a high coefficient of thermal transfer promoting heat exchange.

Each first tube 4 is partially filled with phase change material 6 and comprises a tube plenum 12 filled with a specific gas for limiting corrosion between of the first tube 4 and the phase change material 6.

Each second tube 8 is configured for circulation of heat transfer fluid in the second tube 8 through the latent heat storage device 2.

The latent heat storage device 2 comprises at least one first manifold 16 and at least one second manifold 18.

Each second tube 8 has two opposite ends, one in fluid communication with the first manifold 16 and the other in fluid communication with the second manifold 18. As illustrated, one end of each second tube 8 opens in the first manifold 16 and the other end of each second tube 8 open in the second manifold 18.

Optionally, the latent heat storage device 2 comprises several first manifolds, each first manifold being dedicated to one respective group of second tubes in fluid communication with this first manifold.

Optionally, the latent heat storage device 2 comprises several second manifolds, each second manifold being dedicated to one respective group of second tubes in fluid communication with this second manifold.

The first tubes 4 and the second tubes 8 are arranged in a bundle 20. The first tubes 4 and the second tubes 8 are parallel. The first tubes 4 and the second tubes 8 extend rectilinearly along a longitudinal direction L.

The latent heat storage device 2 comprises a vessel 22 encapsulating the bundle 20. The first tubes 4 are encapsulated in the vessel 22. The second tubes 8 extend through the vessel 22. The intermediate sections of the second tubes 8 defining the bundle 20 are encapsulated in the vessel 22 and end sections of the second tubes 8 connected to the manifolds exit the vessel 22.

The vessel 22 contains a heat transfer medium 24. The heat transfer medium 24 promotes heat exchanges between the first tubes 4 and the second tubes 8. The first tube 4 and the second tubes 8 are immersed in the heat transfer medium 24. The heat transfer medium 24 fills interstices between the first tube 4 and the second tubes 8.

The heat transfer medium 24 is liquid or molten, in particular in a temperature range around the phase change temperature of the phase change material 6 encapsulated in the first tubes 4.

The heat transfer medium 24 is advantageously a metal or a metal alloy with a low fusion temperature. The fusion temperature (or melting point temperature) is for example equal or inferior to 320°, namely equal or inferiorto 250°C. Such low fusion temperature metal or metal alloys are designated as *"liquid metal'.* The heat transfer medium 24 is for example a Pb-Sn binary eutectic, a Sn-Bi binary eutectic, a Pb-Sn, Bi ternary eutectic or even Na. Binary or ternary eutectics made of Pb, Sn and/or Bi may have a fusion temperature ranging from 95°C to 230°C.

The vessel 22 is metallic.

The vessel 22 is partially filled with heat transfer medium 24 and has a vessel plenum 26 filled with a gas for limiting corrosion of the vessel.

The latent heat storage device 2 comprises a level control assembly 28 for controlling the level of heat transfer medium 24 in the vessel 22. The level control assembly 28 is configured to selectively feed the vessel 22 with heat transfer medium 24 and withdraw heat transfer medium 24 from the vessel 22.

The level control assembly 28 comprises for example a heat transfer medium tank 30 fluidly connected to the vessel 22 via a reversible pump 32. The pump 32 is operable for selectively transferring heat transfer medium 24 from the vessel 22 to the tank 30 of for transferring heat transfer medium from the tank 30 to the vessel 22.

The level control assembly 28 is configured to allow emptying the vessel 22 from heat transfer medium 24, e.g. for maintenance operations.

The first tubes 4 and the second tubes 8 are geometrically distributed in the bundle 20 for promoting heat exchange between the phase change material 6 encapsulated in the first tubes 4 and heat transfer fluid 10 circulating in the second tubes 8.

The first tubes 4 and the second tubes 8 are preferably bundled in contact with each other.

The first tubes 4 and the second tubes 8 have identical cross-sections or different cross-sections. Different cross-sections differ in shape and/or in dimensions.

The first tubes 4 and the second tubes 8 preferably have circular cross-section. The first tubes 4 have the same diameter and the second tubes 8 have the same diameter. The diameter of the first tubes 4 equals or differs from the diameter of the second tubes 8.

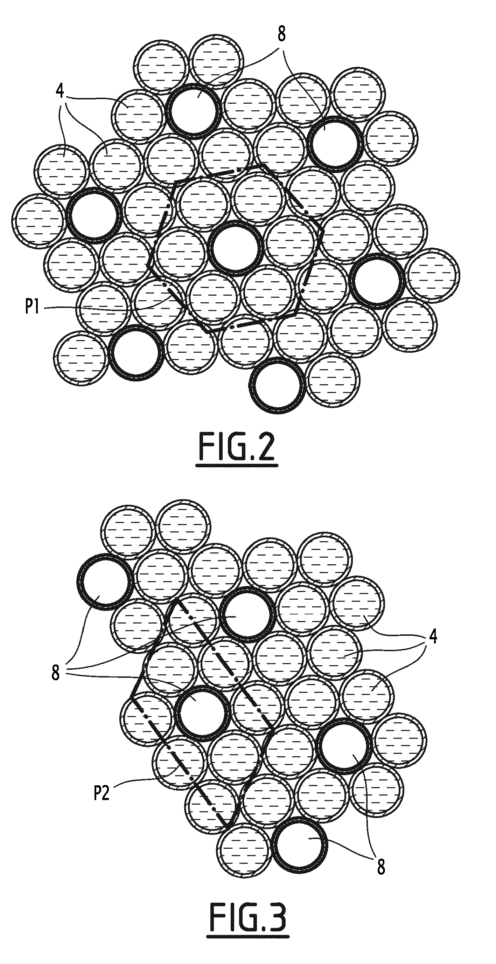

Figure 2 - 7 illustrate various possible geometrical arrangements of tubes in the bundle 20.

In each one of the geometrical arrangements of Figure 2 - 4, the first tubes 4 and the second tubes 8 have identical circular cross-section of same diameter.

The first tubes 4 and the second tubes 8 are arranged at the nodes of a regular geometrical lattice, here a hexagonal lattice. A hexagonal lattice provides a very compact arrangement with a large number of tubes in a minimum area.

Each second tube 8 is fully surrounded by adjacent first tubes 4. Each second tube 8 is here surrounded by a set of six first tubes 4 located at the nodes of a regular hexagon.

In a general manner, each second tube 8 is at the centre of a set of first tubes 4 located at the node of a regular polygon. This promotes heat transfer between each second tube 8 and the adjacent first tubes 4.

The geometrical arrangements of Figures 2 - 4 differ by the distribution and the density of the second tubes 8 with respect to the first tubes 4 in the bundle 20.

Figure 2 illustrates a first geometrical arrangement wherein each second tube 8 is surrounded by a respective set of six first tubes 4. The first tubes 4 of each set are distinct from the first tubes 4 of each other set of first tubes 4. Each first tube 4 is in contact with one single second tube 8. The geometrical lattice is composed of a repeated elementary pattern P1 of one second tube 8 surrounded by six first tubes 4 in a hexagonal geometrical arrangement. One tube out of seven in the bundle 20 is a second tube 8.

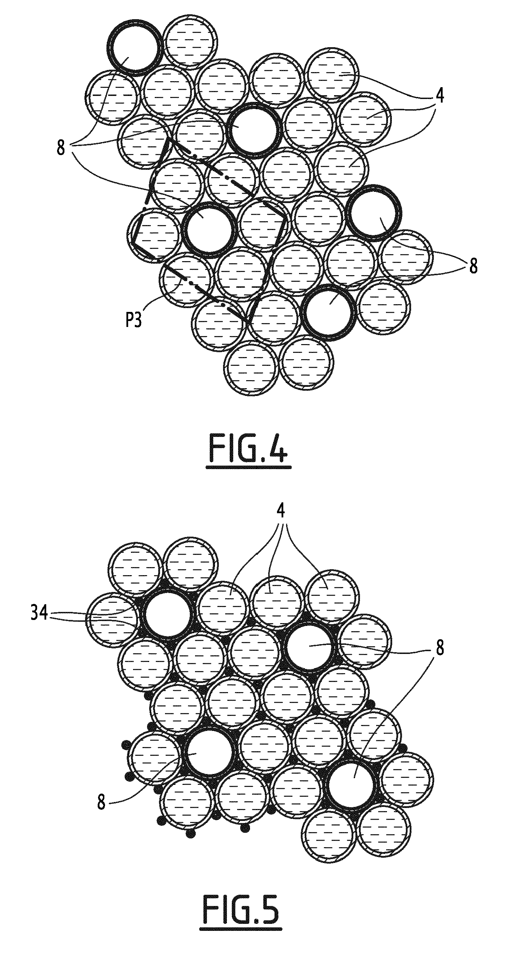

Figures 3 and 4 illustrate respectively a second geometrical arrangement and a third geometrical arrangement with two alternative elementary patterns P2, P3 such that one tube out of six in the bundle of tubes 20 is a second tube 8.

Figure 5 illustrates a fourth geometrical arrangement that differs from the arrangements of Figures 2 - 4 in that the latent heat storage device additionally comprises third tubes 34 encapsulating phase change material. Each third tube 34 has opposed closed ends. The third tubes 34 are of smaller diameter than the first tubes 4. The third tubes 34 are inserted in the bundle 20 and extend in longitudinal interstices delimited between the first tubes 4 and the second tubes 8.

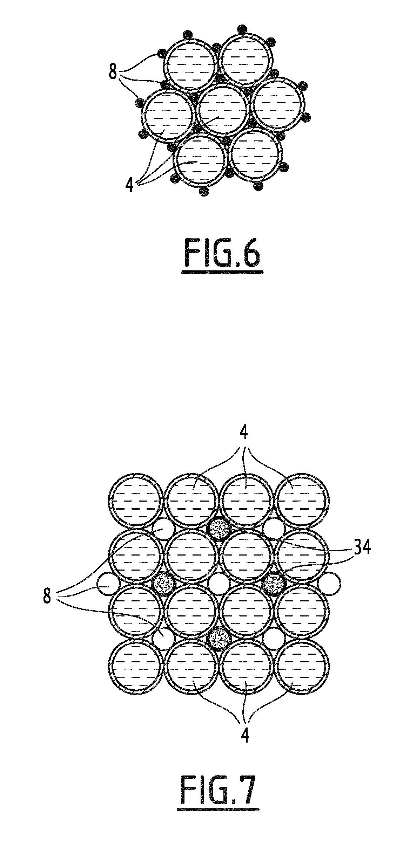

Figure 6 illustrated a fifth geometrical arrangement wherein the first tubes 4 and the second tubes 8 have circular cross-section and the first tubes 4 have a diameter different from a diameter of the second tubes 8. More specifically, the second tubes 8 have a diameter smaller than the diameter of the first tubes 4.

The first tubes 4 are arranged at the nodes of a hexagonal geometrical lattice and the second tubes 8 extend in longitudinal interstices defined between the first tubes 4. Each interstice is delimited between three first tubes 4 located at the nodes of an equilateral triangle. Each second tube 8 is at the centre of a set of three first tube 4 located at the nodes of an equilateral triangle. Each second tube 8 is surrounded by three first tubes 4.

In a variant, the arrangement is reversed: the first tubes have a diameter smaller than the diameter of the second tubes, the second tubes are arranged at the node of a hexagonal geometrical lattice and each first tubes extends in an interstice delimited between three adjacent second tubes at the node of an equilateral triangle.

The tubes may be arranged in another type of geometrical lattice.

Figure 7 illustrated a sixth geometrical arrangement wherein the first tubes 4 and the second tubes 8 have circular cross-section and the first tubes 4 have a diameter different from a diameter of the second tubes 8. More specifically, the second tubes 8 have a diameter smaller than the diameter of the first tubes 4.

The first tubes 4 are arranged at the nodes of a square geometrical lattice and the second tubes 8 extend in longitudinal interstices defined between the first tubes 4. Each interstice is delimited between four first tubes 4 located at the nodes of a square. Each second tube 8 is at the centre of a set of four first tube 4 located at the nodes of a square. Each second tube 8 is surrounded by four first tubes 4.

Optionally and as illustrated on Figure 7, the latent heat storage device additionally comprises third tubes 34 encapsulating phase change material. The third tubes 34 are of circular cross-section and of same diameter than the second tubes 8. The third tubes 34 are inserted in the bundle 20 and extend in longitudinal interstices delimited between the first tubes 4. The second tubes 8 and the third tubes 34 are distributed in staggered row in the interstices. In each row of interstices, a second tube 8 alternate with a third tube 34.

The geometrical arrangements of Figures 5 - 7 comprise tubes of smaller diameter extending in interstices of tubes of larger diameter located at the node of a regular geometrical lattice. This provides a very compact arrangement.

In the variant of Figure 1, each second tube 8 has one end opening in the first manifold 16 and one end opening in the second manifold 18. The first manifold 16 and the second manifold 18 are located at the two opposed ends of the bundle 20.

In a variant, the second tubes are associated in pairs. The second tubes of each pair are fluidly connected at one end of the bundle 20 by a U-shaped return tube. One second tube of each pair of second tube opens in the first manifold opposite the return tube and the other second tube of the pair of second tubes opens in the second manifold opposite the return tube. Each second tube of a pair of second tubes opens in one of the first manifold and the second manifold and is fluidly connected to the other manifold through the other second tube of the pair of second tubes. The first manifold and the second manifold are located at the same end of the bundle 20.

The latent heat storage device 2 enables to capture heat from the heat transfer fluid circulating in the second tubes and to store the heat as latent heat in the phase change material. Heat transfer fluid is introduced in the second tubes at a lower temperature than the temperature of the phase change material to deliver heat from the phase change material due to the temperature gradient.

The latent heat storage device is reversible. The direction of circulation of the heat transfer in the second tubes is reversed while introducing heat transfer fluid at a lower temperature than the temperature of the phase change material to recover heat from the phase change material.

The phase change material is chosen to have a phase change temperature, for example a solid/liquid phase change temperature, that matches a temperature range of the heat transfer fluid at a given range of pressure and a given range of temperature for the heat transfer fluid, such that phase change material captures and delivers heat in the form of latent heat.

Current concentrated solar power plant operating in steady state usually produces steam at a temperature comprised between 300°C and 500°C and at a pressure comprises between 50 and 120 bars.

Phase change material is chosen for example to have a phase change temperature between 240 °C and 350 °C, close to theevaporation temperature of water at the considered pressure. Example of phase change materials are the following compounds (composition in weight %, melting temperature): LiOH/KOH (40/60, 314°C); KNO₃/KCL (96/4, 320°C); KNO₃/KBr/KCL (80/10/10, 342°C); NaCl/KCl/LiCl (33/24/43, 346°C), Pb (100, 328°C), MG-Zn (46.3/53.7, 340°C). Other interesting phase change materials are NaN03 and eutectics from the following materials: NaNO₃/BaNO₃, NaNO₃/Na2SOₑ, KNO₃/K₂SO₄, KNO₂/KNO₃.

The latent heat storage allows charging and discharging a large amount of heat with a high efficiency, thus using efficiently the heat storage potential of the amount of phase change material encapsulated in the first tubes.

The arrangement of first tubes and second tubes - and optionally the third tubes - in a bundle of tubes provides very efficient heat transfer between the heat transfer fluid and the phase change material. The geometrical arrangements of the tubes in the bundle promote power capacity, heat capacity and stability of the power during charge and discharge phases. The geometrical arrangements leads to have a radial heat transfer that is inward directed in the phase change material.

The first tubes or third tubes encapsulating the phase change material enable to address the corrosion issue with a single material. It enables to set the gaseous atmosphere contacting the phase change material and allowing thermodynamic equilibration between gaseous atmosphere and phase change material to control stability of the phase change material and corrosion of the tube.

Heat transfer medium promotes heat transfer in a durable manner.

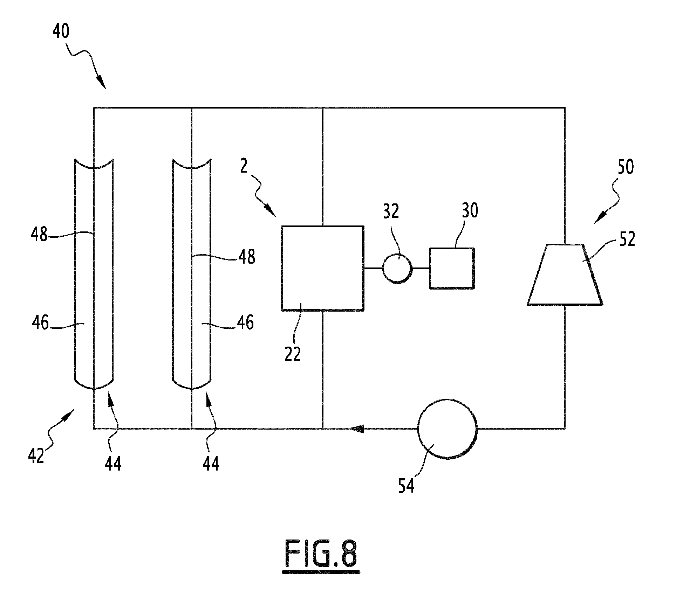

The latent heat storage device is advantageously used in a solar thermal power plant as illustrated on Figure 8.

The solar thermal power plant 40 illustrated on Figure 8 comprises a solar field 42 comprising solar collectors 44 configured for using solar radiations to heat a heat transfer fluid, for example water.

The solar thermal power plant 40 is a concentrated solar power (CSP) plant.

Each solar collector 44 comprises a solar concentrator 46 for concentrating the incident solar radiations towards a receiver 48 for circulation of a heat transfer fluid and heat of the heat transfer fluid due to the concentrated solar radiations. In one embodiment, each solar concentrator 46 comprises a cylindrical-parabolic mirror and the receiver 48 extends along the focal line of the mirror.

Each solar collector 44 is preferably configured to generate steam directly at the exit of the receiver 48. The collectors 44 form a direct steam generation system.

The solar thermal power plant 40 comprises a power block 50 for generating electric energy from the heated heat transfer fluid. In one embodiment, the power block 50 comprises a steam turbine 52.

The solar thermal power plant 40 also comprises a latent heat storage device 2. Only the vessel 22, the pump 32 and the tank 30 are illustrated.

The solar thermal power plant 40 comprises a fluid circuit 54 for circulation of the heat transfer fluid. The fluid circuit 54 connects the solar field 42, the power block 50 and the latent heat storage device 2 in parallel.

In nominal conditions of solar radiations, the fluid circuit 54 is controlled to circulate the heat transfer fluid exiting the solar filed 42 to the power block 50. The power block 50 generates electric energy.

In case of excess of thermal power produced by the solar filed 42 (e.g. at noon period), the fluid circuit 54 is controlled to circulate a fraction of the heat transfer fluid exiting the solar filed 42 to the power block 50 and to circulate another fraction of the heat transfer fluid exiting the solar filed 42 through the latent heat storage device 2. This allows storing the energy in excess in the latent heat storage device 2.

In case of insufficient solar radiations (e.g. before sunrise, after sunset or during cloudy period), the fluid circuit 54 is controlled to recirculate a fraction the heat transfer fluid exiting the power block 50 through the latent heat storage device 2 and to the inlet of the power block 50. This allows recovering heat stored in the latent heat storage device 2 to compensate for the insufficient solar radiations.

In the absence of solar radiations (e.g. overnight), the fluid circuit 54 is controlled to circulate the heat transfer fluid in closed loop between the power block 50 and the latent heat storage device 2. This allows recovering heat stored in the latent heat storage device 2 to operate the power block 50.

## Claims

1. Latent heat storage device comprising a plurality of first tubes (4) containing a phase change material (6) and a plurality of second tubes (8) for circulation of a heat transfer fluid (10) through the latent heat storage device, the first tubes (4) and the second tubes (8) being arranged for heat exchange between the phase change material (6) and the heat transfer fluid (10).

2. Latent heat storage device as in claim 1, wherein the first tubes (4) and the second tubes (8) are arranged in a bundle, the first tubes and the second tubes extending parallel with respect to each other.

3. Latent heat storage device as in claim 2, wherein each second tube (8) is fully surrounded by adjacent first tubes (4).

4. Latent heat storage device as in claims 2 or 3, wherein first tubes (4) and second tubes (8) are arranged at the nodes of a geometrical lattice.

5. Latent heat storage device as in any one of claims 2 - 4, wherein first tubes (4) are arranged at the nodes of a geometrical lattice and second tubes (8) extend in interstices between the first tubes (4).

6. Latent heat storage device as in any one of claims 2 - 5, comprising third tubes (34) encapsulating phase change material, the third tubes (34) being of smaller diameter that the first tubes (4), the third tubes (34) extending in the bundle (20) in interstices delimited between first tubes (4) and/or second tubes (8).

7. Latent heat storage device as in any preceding claim, wherein the first tubes (4) and the second tube (8) have identical cross-sections.

8. Latent heat storage device as in any one of claims 1 - 6, wherein the first tubes (4) have a cross-section area larger than that of the second tubes (8).

9. Latent heat storage device as in any preceding claim, comprising a vessel (22), the first tubes (4) being encapsulated in the vessel (22) and the second tubes (8) extending through the vessel (22).

10. Latent heat storage device as in claim 9, comprising a heat transfer medium encapsulated in the vessel (22) and filling interstices between the first tubes (4) and the second tubes (8).

11. Latent heat storage device as in claim 10, wherein the heat transfer medium is a metal or a metal alloy.

12. Latent heat storage device as in claim 10 or 11, wherein the heat transfer medium is in liquid state or molten state at the phase change temperature of the phase change material.

13. Latent heat storage device as in any one of claims 10 - 12, comprising a heat transfer medium tank (30) fluidly connected to the vessel (22) for transferring heat transfer medium between the vessel (22) and the tank (30).

14. Latent heat storage device as in any preceding claim, comprising at least one first manifold (16) and ant least one second manifold (18), each second tube (8) having one end fluidly connected to the first manifold (16) and one end fluidly connected to the second manifold (18).

15. Solar thermal power plant (42) comprising at least one solar collector (44) configured for using solar radiations to heat a heat transfer fluid, a power block (50) for generating electric energy from the heat transfer fluid heated in the solar collector (44), at least one latent heat storage device (2) as in any one of the preceding claims and fluidly connected to the solar collector (44) and the power block (50) for circulation of the heat transfer fluid through the heat storage device in at least one operation mode.
